# EUROPÄISCHE PATENTANMELDUNG

(11) **EP 4 293 347 A1**
(43) Veröffentlichungstag der Anmeldung: **20.12.2023**
(21) Anmeldenummer: 22450002.5
(22) Anmeldetag: 13.06.2022
(51) Int. Cl.: G01N 27/12

(54) **PASSIVER FEUCHTIGKEITSDETEKTOR**

(71) Anmelder: Tagtron GmbH, 2340 Mödling (DE)
(72) Erfinder: Männer, Bernhard, 4852 Weyregg am Attersee (AT); Neumayer, Michael, 4903 Manning (AT); Mittendorfer, Fridolin, 4863 Seewalchen am Attersee (AT); Engelbrecht, Gerhard, 4802 Ebensee (AT)
(74) Vertreter: Rippel, Andreas O.

(57) **Zusammenfassung**

Die Erfindung betrifft einen passiven Feuchtigkeitsdetektor (1) zum Einbau in Materialien, deren Feuchtigkeitsgehalt wiederkehrend überprüft werden soll.

Der Feuchtigkeitsgehalt von Materialien, beispielsweise Dämmaterialien wirkt sich auf die Haltbarkeit und Verwendungsfähigkeit bestimmend aus. Problematisch bei anfänglichen und bei nachträglich entstehenden Mängeln ist, daß der Eintritt von Wasser erst nach einiger Zeit nach der Durchnässung des Isoliermaterials erkannt wird. Die gegenständliche Erfindung ermöglicht es Feuchtigkeitsuntersuchungen zerstörungsfrei und ohne viel Aufwand durchzuführen.

Der erfindungsgemäße Feuchtigkeitsdetektor (1) ist mit zwei getrennten Antennen (6, 8) versehen, wobei eine Antenne (6) zur Lokalisierung des Feuchtigkeitsdetektors (1) dient. Mittels dieser Antenne (6) wird ein von einem Benutzer ausgesendetes und von der Antenne (6) empfangenes Signal in jedem Fall reflektiert. Eine weitere Antenne (8) reflektiert ein empfangenes Signal nur im trockenen Zustand. Durch diese Anordnung ist es möglich, daß der Benutzer einfach den Feuchtigkeitsdetektor (1) lokalisieren kann und weiters erkennen kann, ob der Feuchtigkeitsdetektor (1) trocken ist oder nicht.

Erfindungsgemäß ist die beim Empfang eines Signals in jedem Fall reflektierende Antenne (6) mit zwei Hochfrequenzdioden (5, 51) ausgestattet und ist die weitere Antenne (8) demgegenüber mit einer Kurzschlußstelle (9) und einer Hochfrequenzdiode (10) ausgestattet. Die Kurzschlußstelle (9) wird bei Feuchtigkeit geschlossen und damit reflektiert die Antenne (8) kein Signal.

## Beschreibung

Die gegenständliche Erfindung betrifft einen passiven Feuchtigkeitsdetektor zum Einbau in Materialien deren Feuchtigkeitsgehalt wiederkehrend überprüft werden soll.

Der Feuchtigkeitsgehalt von Materialien wirkt sich auf die Haltbarkeit, Verwendungsfähigkeit und Qualität eines Produktes aus. Die Bestimmung des Feuchtegehaltes spielt deshalb insbesondere in der Baubranche eine wichtige Rolle. Beispielsweise sind Bau- oder Abdichtungsfehler bei Dächern zumeist erst durch den späteren Eintritt von Wasser zu erkennen. Das eintretende Wasser durchnäßt mit der Zeit sukzessive das Isoliermaterial, wird aber oftmals erst beim Durchdringen von verschiedenen Schichten als Feuchtigkeitsschaden im Innenbereich sichtbar. Die Beseitigung des Mangels und der Folgeschäden ist zu diesem (späten) Zeitpunkt oft zeit- und kostenintensiv.

Zur Vermeidung von großen Folgeschäden sollte eine Feuchtigkeitsmessung in regelmäßigen Abständen durchgeführt werden. Schäden (insbesondere bei der Abdichtung) können bereits beim Bau (das heißt ab Anfang) vorhanden sein, möglich ist es aber auch, daß die Schäden erst sukzessive, insbesondere durch Alterungsprozesse der Baumaterialien entstehen. Die Auswirkungen des sukzessiven Wassereintritts sind aber nicht sofort zu sehen, sodaß eine Behebung erst durchgeführt wird, wenn bereits erhebliche Schäden am Bauwerk entstanden sind.

Herkömmliche Feuchtigkeitsmeßgeräte können zwar im Regelfall genaue Meßergebnisse anzeigen, die Anwendung dieser Meßgeräte erfordert aber einen gut ausgebildeten Benutzer und ist überdies zeit- und damit kostenintensiv.

Die Erfindung hat es sich daher zum Ziel gesetzt einen Feuchtigkeitsdetektor zum Einbau zu entwickeln der einfach aufgebaut ist und es möglich macht, daß auch nicht spezialisierte Arbeitskräfte die Untersuchungen rasch und ohne viel Aufwand durchführen können. Daß auch nicht spezialisierte Arbeitskräfte die Untersuchungen problemlos durchführen können ist gerade in Zeiten des Facharbeitermangels ein wesentlicher Vorteil.

Dieses Ziel wird dadurch erreicht, daß der passive Feuchtigkeitsdetektor mit zwei getrennten Antennen versehen ist, wobei eine Antenne zur Lokalisierung des Feuchtigkeitsdetektors ein von einem Sender ausgesendetes Signal, welches der Detektor empfängt, in jedem Fall, das heißt sowohl im trockenen als auch im nassen Zustand reflektiert und eine weitere Antenne ein empfangenes Signal nur im trockenen Zustand reflektiert.

Der Sender ist in einem Handgerät untergebracht und wird von der die Prüfung durchführenden Person über die zu prüfenden Stellen bewegt. Reflektieren beide Antennen ist der Bereich trocken, reflektiert nur eine Antenne ist zwar der Detektor lokalisiert, der Bereich ist aber naß.

Eine gute Funktion des Feuchtigkeitsdetektors wird dadurch erreicht, daß die beim Empfang eines Signales in jedem Fall reflektierende Antenne zur Lokalisierung mit zwei Hochfrequenzdioden ausgestattet ist. Der Feuchtigkeitsdetektor wird in dem zu überwachenden Material (z.B. Dämmaterial) eingebaut/eingelegt und kann die Position des Feuchtigkeitsdetektors von außen durch Reflexion der von einem Handgerät gesendeten Signale aufgefunden werden.

Zur Feststellung, ob das den Detektor umgebende Material feucht ist oder nicht, ist der Feuchtigkeitsdetektor mit einer weiteren Antenne mit einer Kurzschlußstelle ausgestattet. Auf die Antenne ist eine Hochfrequenzdiode aufgelötet.

Über der Kurzschlußstelle ist ein wasseraufsaugendes Material, vorzugsweise Vlies, gelegt, welches im feuchten Zustand die Kurzschlußstelle schließt, sodaß die Antenne kein Signal reflektiert. Der Zustand "naß" wird dadurch für den Benutzer angezeigt.

Ein einfacher Aufbau des Feuchtigkeitsdetektors ist dadurch gewährleistet, daß die beiden Antennen auf einer Leiterplatte (Printed Circuit Board) angeordnet sind. Sämtliche Hochfrequenzdioden werden auf der Leiterplatte entweder kalt gelötet oder mit leitendem Klebstoff verklebt.

Nachstehend ist die Erfindung anhand eines Beispiels gezeigt, wobei die Erfindung nicht auf dieses Beispiel beschränkt ist.

Dabei zeigen die
Fig. 1 einen erfindungsgemäßen Feuchtigkeitsdetektor in Ansicht; weiters
die Fig. 2 eine Ansicht des Feuchtigkeitsdetektors ohne die oberste Schicht (Schutzfolie); weiters
die Fig. 3 die Antennen des Feuchtigkeitsdetektors aufgebracht auf einer Leiterplatte (in Ansicht) und
die Fig. 4 die verschiedenen Schichten des Feuchtigkeitsdetektors, in Art eines Buches aufgeklappt.

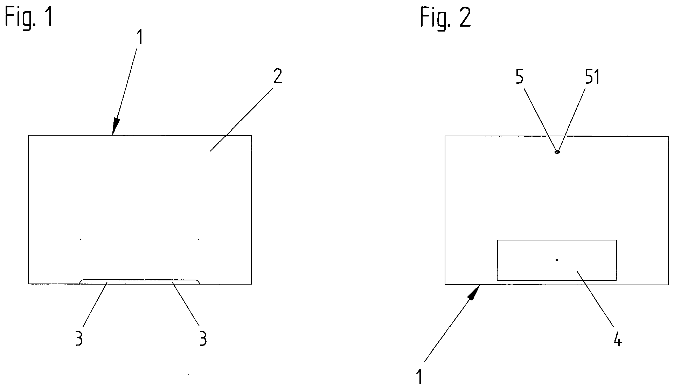

In Fig. 1 ist ein erfindungsgemäßer Feuchtigkeitsdetektor 1, welcher ungefähr Kreditkartenformat hat, zu sehen. Konkret zu sehen ist die oberste (und äußerste) Schicht des Feuchtigkeitsdetektors 1. Diese oberste Schicht wird durch eine Schutzfolie 2 gebildet. Diese Schutzfolie 2 kann aus PET Folie aufgebaut sein. Im Bereich 3 ist die Schutzfolie ausgeschnitten und kann dadurch mangels Schutzfolie 2 die unter der Schutzfolie 2 liegende Schicht des Feuchtigkeitsdetektors 1 naß/feucht werden.

Die Schutzfolie 2 schützt den Feuchtigkeitsdetektor vor Beschädigungen durch Zerkratzen und ähnliches. Auf die Schutzfolie können auch verschiedenste Informationen wie Marke, Type, CE Zeichen, Artikelnummern, eine Kurzbedienungsanleitung, Werbeaufdrucke und/oder die Einbaurichtung bzw. -position aufgedruckt werden.

In der Fig. 2 ist der Feuchtigkeitsdetektor 1 ohne die Schutzfolie 2 (diese ist in Fig. 1 sichtbar) dargestellt. Ein wasseraufsaugendes Material 4, vorzugsweise Vlies, saugt Wasser/Feuchtigkeit auf, welches der Feuchtigkeitsdetektor anzeigen soll um auf einen Bauschaden oder eine Beschädigung (beispielsweise in der Abdichtung des Bauwerks) hinzuweisen. Das Wasser/die Feuchtigkeit kann aufgrund des in Fig. 1 sichtbaren Bereiches 3 vom wasseraufsaugenden Material 4 angesaugt werden. (Im Bereich 3 ist gemäß der Fig. 1 keine Schutzfolie 2 angebracht.)

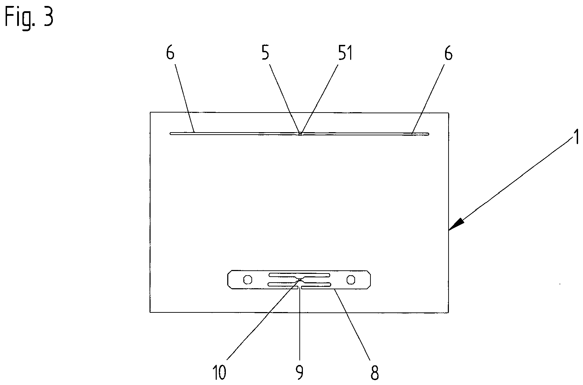

Sichtbar sind weiters eine Hochfrequenzdiode 5 und eine Hochfrequenzdiode 51 der in jedem Fall reflektierenden Antenne 6. (Die Antenne 6 ist in der Fig. 3 zu sehen.)

In der Fig. 3 ist das in der Fig. 2 sichtbare wasseraufsaugende Material 4 nicht mehr sichtbar. Sichtbar in Fig.3 ist eine Antenne 6, die in jedem Fall ein gesendetes Signal reflektiert und damit der Lokalisierung des Feuchtigkeitsdetektors 1 dient. Auf der Antenne 6 sind die Hochfrequenzdioden 5 und 51 aufgelötet, wodurch die Antenne 6 die dritte Reflexions-Oberwelle in Megahertz retour reflektiert.

Eine weitere Antenne 8 ist mit einer Kurzschlußstelle 9 ausgestattet und ist zusätzlich auf die Antenne 8 eine Hochfrequenzdiode 10 aufgelötet. Wenn an der Antenne 8 die Kurzschlußstelle 9 geöffnet ist, reflektiert die Antenne 8 aufgrund der Hochfrequenzdiode 10 die zweite und dritte Reflexions-Oberwelle in Megahertz zum Handgerät des Benutzers. Dies ist für den Benutzer dann das Signal, daß der Bereich um den Feuchtigkeitsdetektor 1 trocken ist. Das wasseraufsaugende Material 4 konnte (noch) keine Flüssigkeit/Feuchtigkeit aufsaugen.

Saugt hingegen das wasseraufsaugende Material 4 (vorzugsweise Vlies) (in Fig. 2 sichtbar) Wasser auf, dann wird die Kurzschlußstelle 9 aufgrund der Feuchtigkeit geschlossen. Dies hat zur Folge, daß die Antenne 8 kein Signal reflektiert. Mangels eines reflektierenden Signals besitzt der Benutzer am Handgerät die Information, daß der Feuchtigkeitsdetektor 1 Feuchtigkeit detektiert hat.

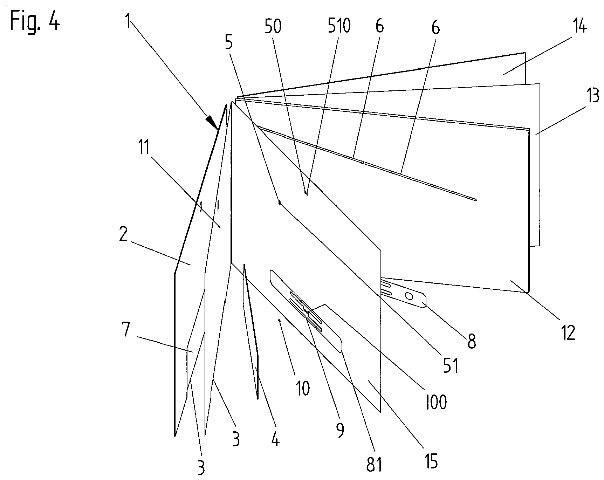

Fig. 4 zeigt die Schichten des Feuchtigkeitsdetektors 1 aufgeblättert in Art eines Buches. Äußerste und oberste Schicht ist die Schutzfolie 2, die vorzugsweise aus einer strapazierfähigen PET-Folie gebildet ist. Diese Folie 2 schützt den Feuchtigkeitsdetektor 1 vor Beschädigungen. Da das wasseraufsaugende Material 4 (Flies)eine gewisse Stärke besitzt, ist im Feld 7 die Folie 2 nach außen gedrückt.

Unterhalb der Schutzfolie 2 befindet sich eine dünne Kleberschicht 11. Diese Kleberschicht 11 kann sich bereits von vornherein auf der Schutzfolie 2 befinden, sodaß diese als "selbstklebende" Schutzfolie 2 ausgebildet ist. Der Bereich 3 ermöglicht es Wasser/Feuchtigkeit einzudringen und saugt das Wasser aufsaugende Material 4 (vorzugsweise Vlies) das eindringende Wasser auf.

Die Antennen 6 und 8 sind auf einer Leiterplatte 12 (Printed Circuit Board oder auch Flexible Circuit Board) aufgebracht.

Die Hochfrequenzdioden 5 und 51 sind auf der Antenne 6 entweder kalt gelötet oder mit leitendem Klebstoff verklebt.

Eine Hochfrequenzdiode 10 ist auf der Antenne 8 entweder kalt gelötet oder mit leitendem Klebstoff verklebt.

Die in jedem Fall reflektierende Antenne 6 ist mit den beiden Hochfrequenzdioden 5 und 51 versehen. Aus diesem Grunde reflektiert die Antenne 6 die dritte Reflexions-Oberwelle in Megahertz retour an das Handgerät des Benutzers. Die Antenne 6 reflektiert damit das Signal für die Lokalisierung des Feuchtigkeitsdetektors 1.

Die Hochfrequenzdiode 10 sitzt auf der Antenne 8. Aus diesen Gründen reflektiert die Antenne 8 die zweite und dritte Reflexions-Oberwelle in Megahertz, wenn an der Antenne 8 die Kurzschlußstelle 9 geöffnet ist. Ist die Kurzschlußstelle 9 aufgrund von Wasser im wasseraufsaugenden Material 4 (Vlies) geschlossen, reflektiert die Antenne 8 kein Signal. Dies ist der Indikator für den Benutzer, daß die Umgebung des Feuchtigkeitsdetektors 1 feucht ist.

Das wasseraufsaugende Material 4 dient als Kurzschlußbügel an der Kurzschlußstelle 9 der Antenne 8.

Auf der Leiterplatte 12 ist ein Lötstop 15 aufgebracht. In den Bereichen 50 und 510 ist der Lötstop 15 bei den Hochfrequenzdioden 5 und 51 ausgespart, im Bereich 80 ist der Lötstop 15 bei der Antenne 8 und im Bereich 100 ist der Lötstop 15 bei der Hochfrequenzdiode 10 ausgespart.

Unterhalb der Leiterplatte 12 befinden sich eine Kleberschicht 13 und eine untere Schutzfolie 14.

Die Erfindung ist nicht auf das gezeigte Ausführungsbeispiel beschränkt. Insbesondere kann der Feuchtigkeitsdetektor eine andere Form aufweisen und kann auch die Anzahl der Schichten verändert werden.

## Patentansprüche

1. Passiver Feuchtigkeitsdetektor (1) zum Einbau in Materialien deren Feuchtigkeitsgehalt wiederkehrend überprüft werden soll, **dadurch gekennzeichnet, daß** der Feuchtigkeitsdetektor (1) mit zwei getrennten Antennen (6, 8) versehen ist, wobei eine Antenne (6) zur Lokalisierung des Feuchtigkeitsdetektors (1) ein empfangenes Signal in jedem Fall reflektiert und eine weitere Antenne (8) ein empfangenes Signal nur im trockenen Zustand reflektiert.

2. Feuchtigkeitsdetektor (1) nach Anspruch 1, **dadurch gekennzeichnet, daß** die beim Empfang eines Signals in jedem Fall reflektierende Antenne (6) zur Lokalisierung mit zwei Hochfrequenzdioden (5, 51) ausgestattet ist.

3. Feuchtigkeitsdetektor (1) nach Anspruch 1, **dadurch gekennzeichnet, daß** die weitere Antenne (8) mit einer Kurzschlußstelle (9) und einer Hochfrequenzdiode (10) ausgestattet ist.

4. Feuchtigkeitsdetektor (1) nach Anspruch 1 und 3, **dadurch gekennzeichnet, daß** über die Kurzschlußstelle (9) ein wasseraufsaugendes Material (4) gelegen ist, welches im feuchten Zustand die Kurzschlußstelle (9) schließt.

5. Feuchtigkeitsdetektor (1) nach einem der Ansprüche 1 bis 4, **dadurch gekennzeichnet, daß** die beiden Antennen (6, 8) auf einer Leiterplatte (12) (Printed Circuit Board oder Flexible Circuit Board) aufgebracht sind.
